# FASCICULE DE BREVET EUROPEEN

(11) **EP 1 859 600 B1**
(45) Date de publication et mention de la délivrance du brevet: **16.07.2014**
(21) Numéro de dépôt: 06726211.3
(22) Date de dépôt: 01.03.2006
(51) Int. Cl.: H04L 29/06, G06F 17/30, H04L 29/12, H04L 29/08

(54) **Procédé amélioré de transmission de données et d'informations de service qui leur sont associeés**
Verbessertes Verfahren zum Übertragen von Daten und diesbezügliche Dienstdaten
Improved method for transmitting data and related service data

(30) Priorité: 04.03.2005 FR 0502197
(43) Date de publication de la demande: 28.11.2007
(73) Titulaire: Orange, 75015 Paris (FR)
(72) Inventeur: DUSSAUME, Philippe, F-22300 Lannion (FR); GUILLOT, Yvon, F-22560 Trebeurden (FR); CHEVIET, Jean-Louis, F-24440 SAINTE CROIX DE BEAUMONT (FR)
(86) Numéro de dépôt international: PCT/FR2006/050187
(87) Numéro de publication internationale: WO 2006/092537

(56) Documents cités:
- GORSKI DANIEL T.: "29.2 Was ist eine Session ID? Was ist PHPSESSID?"[Online] 2004, pages 1-2, XP002353820 Internet Extrait de l'Internet: URL:http://faq-php.de/q/q-php-was.html> [extrait le 2005-11-15]

## Description

La présente invention concerne un procédé de transmission de données et d'informations de service qui sont associées auxdites données, incluant une étape d'adressage au cours de laquelle un ensemble d'informations de service qui est destiné à être mémorisé est référencé au moyen d'une adresse.

Un tel procédé est présentement mis en oeuvre dans des systèmes de télécommunication exploités par la demanderesse, en vue de permettre une transmission et une mémorisation temporaire d'informations de service formées par des informations de contexte ou de profil relatives à un utilisateur du système, en accompagnement avec des données émises par cet utilisateur. Les éléments qui sont ici appelés "données" formeront usuellement un corps essentiel de la communication qui est en principe initiée par ledit utilisateur dans l'état actuel de la technique, ces données pouvant par exemple être constituées par des données représentatives d'un signal de parole et/ou d'un signal vidéo produits par l'utilisateur. Les informations de contexte ou de profil pourront par exemple consister en une localisation géographique ou une liste de secteurs d'intérêt propres à cet utilisateur.

Dans l'état actuel de la technique, un système de télécommunication mettant en oeuvre le procédé décrit plus haut inclut un réseau de communication principal, tel un réseau téléphonique commuté, apte à mettre en relation un terminal mis à disposition de l'utilisateur avec au moins un premier serveur, dit serveur amont, identifié comme premier destinataire d'une communication qu'aura initiée l'utilisateur, par exemple en composant un code prédéterminé sur un clavier alphanumérique dont est muni son terminal. Ce premier serveur pourra par exemple être un serveur vocal d'accueil apte à recevoir de la part de l'utilisateur une requête verbale et à orienter cette requête, et donc la communication en cours, vers un deuxième serveur, dit serveur aval, lequel aura été identifié par le serveur amont comme supportant un service apte à satisfaire la requête formulée par l'utilisateur.

Dans le système connu, lorsque le serveur amont ré-oriente la communication vers le serveur aval, ce serveur amont peut préalablement stocker les informations de service à un emplacement particulier d'un espace mémoire inclus dans un serveur auxiliaire et envoyer, *via* une liaison de signalisation prévue à cet effet, une adresse permettant d'identifier ledit emplacement particulier. En l'occurrence, cette adresse est formée par une combinaison d'une adresse IP (abréviation de l'expression anglaise "Internet Protocol" bien connue de l'homme du métier) attribuée au serveur auxiliaire et d'une adresse d'un port mémoire, interne audit serveur auxiliaire, où les informations de service auront effectivement été stockées.

Dans l'état actuel de la technique, aucune précaution particulière n'est prévue quant à l'attribution des adresses de port par le serveur auxiliaire, de sorte qu'une adresse de port pourra être ré-attribuée, en cours de session, à un élément tiers extérieur à la session en cours, lequel élément tiers pourra alors provoquer, par une opération d'écriture de nouvelles données à l'adresse de port considérée, un écrasement des informations de service qui avaient été initialement mémorisées à cette adresse de port.

De plus, si l'on définit une session comme une chaîne d'activations successives de différents moyens de communication, tels par exemple le terminal de l'utilisateur et les serveurs amont et aval évoqués plus haut, les inventeurs ont constaté que, dans l'état actuel de la technique, les informations de service mémorisées par l'un de ces moyens de communication lui sont liées et sont appelées à disparaître très rapidement après que ce moyen de communication aura cessé d'intervenir dans la session en cours. Or, selon la définition de la session qui est celle que les inventeurs se proposent de mettre en oeuvre, il doit pouvoir advenir qu'un utilisateur interrompe sa communication sans pour autant que la session elle-même ne s'en trouve interrompue, des serveurs tels les serveurs amont et aval évoqués ci-dessus pouvant dans une telle situation avoir pris le relais et procéder hors connexion à un traitement de données fournies par l'utilisateur avant de rappeler cet utilisateur pour lui fournir les résultats du traitement. Une telle continuité de la session en cours ne peut être accompagnée d'une continuité d'existence des informations de service dans les systèmes de télécommunication connus, de sorte qu'il n'est pas envisageable à l'heure actuelle de réaliser des sessions de communication dont un ou plusieurs intervenants pourraient se déconnecter temporairement ou définitivement sans que la chaîne de traitement de données ne s'en trouve interrompue.

Ainsi, d'une manière générale, dans les systèmes de télécommunication connus, il n'existe aucune garantie de pérennité des informations de service mémorisées dans le serveur auxiliaire. En outre, si un intervenant ordonne en cours de session une mémorisation dynamique d'informations de service supplémentaires à des informations de service antérieurement mémorisées par ce même intervenant, il ne pourra être établi aucun lien entre les informations de service supplémentaires et celles qui ont été antérieurement mémorisées, alors qu'un tel lien serait en principe utile pour des destinataires de ces informations, qui pourraient par exemple devoir faire un traitement simultané de toutes les informations de service, lequel traitement serait alors facilité par un regroupement de ces informations.

Le document "29.2 Was ist eine Session ID? Was ist PHPSESSID?" de Gorski Daniel T., extrait de l'Internet à l'URL "http://faq-php.dq/q/q-php-was.html", explique l'utilité et la mise en oeuvre de la notion d'identité de session PHP, dans une session de communication entre un client et un serveur PHP.

L'un des buts de l'invention est de remédier aux problèmes décrits ci-dessus, en proposant un procédé et un système de transmission de données dans lesquels toutes les informations de service pertinentes pour une session de communication en cours d'exécution pourront être reconnues comme telles afin notamment d'être préservées tout au long du déroulement de ladite session.

A cet effet, l'invention concerne un procédé conforme à l'objet de la revendication 1. Selon l'invention l'adresse au moyen de laquelle un ensemble d'informations de service est référencé inclut un identifiant de session, une session étant définie comme une chaîne d'activations successives de différents moyens de communication, tels par exemple le terminal mis à disposition de l'utilisateur ou les serveurs amont et aval évoqués plus haut.

L'invention permet de marquer des informations de service de manière univoque au moyen d'un identifiant qui sera invariable tout au long du déroulement de la session considérée, lequel identifiant pourra en outre être transmis à tous les moyens de communication intervenant au cours de ladite session. Aucun élément extérieur à la session ne pourra donc, en principe, atteindre ni altérer ces informations de service, dont la pérennité sera ainsi assurée jusqu'au terme de la session.

Dans nombre d'applications, il pourra advenir que l'identifiant de session soit constitué par une chaîne de caractères présentant une longueur trop importante pour être transportée telle quelle sur le réseau de communication principal en vue d'être communiquée d'un serveur amont à un serveur aval. Selon une variante de l'invention, un procédé décrit plus haut inclura alors avantageusement au moins :
- une étape de génération d'un identifiant d'appel destiné à former partie de l'adresse attribuée à un ensemble donné d'informations de service et à être temporairement lié à un identifiant de session propre à la session considérée, et
- une étape de transmission dudit identifiant d'appel *via* une liaison de signalisation établie entre deux moyens de communication.

L'identifiant d'appel ayant une nature plus volatile que l'identifiant de session, en tant qu'uniquement utile pour une transmission entre lesdits deux moyens de communication, il sera possible de le coder au moyen d'une chaîne de caractères de longueur bien plus faible que celle de l'identifiant de session dont la pérennité doit être garantie quelle que soit la longueur de la session. Cette plus faible longueur rend possible la transmission de l'identifiant d'appel au moyen d'une liaison de signalisation qui n'aurait pas pu assurer une transmission de l'identifiant de session lui-même.

De plus, bien que l'identifiant de session soit unique, le procédé conforme à la variante décrite ci-dessus permet de mémoriser, par exemple de manière dynamique, de multiples ensembles d'informations de service au moyen de multiples identifiants d'appel qui seront tous liés à l'unique identifiant de session, lesquels multiples ensembles d'informations de service seront ainsi identifiables comme liés entre eux du fait de la relation que partagent tous leurs identifiants d'appel avec l'identifiant de la session en cours.

Par ailleurs, il est à noter que l'étape de génération pourra être exécutée non seulement après, mais aussi avant que l'identifiant de la session considérée ne soit généré. En effet, il est tout à fait envisageable de prévoir une procédure de création et de réservation d'identifiants d'appels qui serait déclenchée par chacun des moyens de communication lors de son initialisation, de sorte que chaque moyen de communication n'aura ultérieurement plus qu'à réaliser une association entre un identifiant d'appel préexistant et un identifiant de session nouvellement créé pour générer une adresse destinée à référencer un ensemble particulier d'informations de service.

Une session peut se dérouler de manière linéaire, et faire alors intervenir en cascade une succession de moyens de communication, chacun desquels attrayant dans la session un et un seul moyen de communication suivant. Une session pourra également ne pas se dérouler de manière linéaire, un moyen de communication dit d'origine pouvant alors attraire dans la session en cours non pas un seul, mais simultanément au moins deux moyens de communication destinés chacun à produire une contribution spécifique au traitement des données devant être accompli au cours de la session.

Selon un mode de mise en oeuvre particulier de la variante décrite ci-dessus, un procédé conforme à l'invention pourra en outre inclure une étape de génération d'au moins un premier et un deuxième identifiant de branche, liés chacun à un même identifiant de session, laquelle étape étant destinée à être exécutée lors d'un établissement simultané d'une première et d'une deuxième liaison impliquant toutes deux un même moyen de communication d'origine, tout identifiant d'appel destiné à être transmis par ce moyen de communication d'origine *via* l'une des première et deuxième liaisons étant alors lié simultanément à l'identifiant de session et à l'un des premier et deuxième identifiants de branche, respectivement.

Dans ce mode de mise en oeuvre particulier, le moyen de communication d'origine pourra attribuer à différents ensembles d'informations de service autant de destinations respectives au moyen de différents identifiants de branche.

Les identifiants de session pourront être générés de diverses manières et par différentes entités incluses dans un système de télécommunication dans lequel l'invention sera mise en oeuvre. Ainsi, cet identifiant de session pourra être généré par le terminal de l'utilisateur dans un cas où ce terminal joue le rôle d'initiateur de la session. Cet identifiant de session pourra alternativement être généré par le premier moyen de communication, par exemple le serveur dit amont, avec lequel le terminal de l'utilisateur aura été mis en communication *via* le réseau de communication principal. Selon encore une autre alternative possible, cet identifiant de session pourra être généré par un gestionnaire du réseau de communication principal *via* lequel les différents moyens de communication sont destinés à communiquer les uns avec les autres. En outre, on pourra envisager de mémoriser l'identifiant de session dans différents serveurs intermédiaires, parfois appelés serveurs "proxy", de manière à ce que cet identifiant de session ne risque pas d'être perdu en cas de rupture accidentelle de la chaîne de communication constituant la session en cours.

Les identifiants d'appel pourront eux aussi être générés de différentes manières, et par différents moyens de communication susceptibles d'intervenir en cours de session. Dans un mode de mise en oeuvre particulier de l'invention où les informations de service sont destinées à être mémorisées au sein d'un serveur apte à communiquer, *via* un réseau de communication spécifique, avec les différents moyens de communication destinés à être activés en cours de session, l'étape de génération de l'identifiant d'appel pourra avantageusement être exécutée par ledit serveur sur requête de l'un desdits moyens de communication.

Ce mode de mise en oeuvre est avantageux en ce que tous les identifiants d'appel seront créés et gérés de manière centralisée par un élément séparé des moyens de communication mais apte à communiquer avec chacun d'entre eux. Ce serveur spécifique, qui sera ci-après appelé serveur d'informations de service, pourra également être apte à générer l'identifiant de session, par exemple sur requête du premier moyen de communication auquel le terminal de l'utilisateur aura été connecté.

Dans d'autres modes de mise en oeuvre de l'invention, chaque moyen de communication pourra être apte à créer lui-même un identifiant d'appel et à simplement informer le serveur d'informations de service en lui notifiant cette création, ou en sollicitant une écriture de données à une adresse définie par l'identifiant d'appel ainsi créé. Une telle génération décentralisée risquera cependant d'occasionner des collisions entre des ordres d'écriture émanant de différents moyens de communication ayant désigné séparément une même adresse définie par des identifiants d'appel identiques.

Selon l'un des ses aspects matériels, l'invention concerne également, en tant que directement obtenu par la mise en oeuvre du procédé décrit plus haut, un signal destiné à être transmis entre deux moyens de communication intervenant dans une même session définie comme une chaîne d'activations successives de différents moyens de communication entre lesquels des données d'une part, et des informations de service d'autre part, formées par des informations de contexte ou de profil et associées auxdites données, sont destinées à être transmises, lequel signal étant caractérisé en ce qu'il inclut une adresse au moyen de laquelle lesdites informations de service sont référencées, laquelle adresse étant représentative d'un identifiant de la session en cours, et laquelle adresse assurant un accès par au moins un desdits moyens de communication auxdites informations de service, lesdites informations de service ayant été mémorisées par l'autre desdits moyens de communication au cours de ladite session, et la mémorisation desdites informations de service étant assurée jusqu'au terme de ladite session.

Selon un autre de ses aspects matériels, l'invention concerne également un système de télécommunication apte à assurer une transmission de données et d'informations de service formées par des informations de contexte ou de profil, qui sont associées auxdites données, incluant des moyens d'adressage aptes à référencer lesdites informations de service au moyen d'une adresse, système caractérisé en ce que lesdits moyens d'adressage sont aptes à inclure dans ladite adresse un identifiant de session, une session étant définie comme une chaîne d'activations successives de différents moyens de communication entre lesquels des données et des informations de service sont destinées à être transmises, et en ce que ladite adresse assure un accès par au moins un desdits moyens de communication auxdites informations de service, lesdites informations de service ayant été mémorisées par un autre desdits moyens de communication au cours de ladite session, et la mémorisation desdites informations de service étant assurée jusqu'au terme de ladite session.

Selon une variante de cet autre aspect matériel de l'invention, un système tel que décrit ci-dessus pourra en outre inclure :
- des moyens de génération d'un identifiant d'appel destiné à former partie de l'adresse attribuée à un ensemble donné d'informations de service et à être temporairement lié à un identifiant de session propre à la session considérée, et
- des moyens de transmission dudit identifiant d'appel *via* une liaison de signalisation établie entre deux moyens de communication.

Un tel système de télécommunication inclura en outre avantageusement des moyens de génération d'au moins un premier et un deuxième identifiant de branche, liés chacun à un même identifiant de session, lesquels moyens de génération étant destinés à être activés lors d'un établissement simultané d'une première et d'une deuxième liaison impliquant toutes deux un même moyen de communication d'origine, tout identifiant d'appel destiné à être transmis par ce moyen de communication d'origine *via* l'une des première et deuxième liaisons étant alors lié simultanément à l'identifiant de session et à l'un des premier et deuxième identifiants de branche, respectivement.

Dans un mode de réalisation particulièrement avantageux de l'invention, un système conforme à la description qui précède inclura de préférence un serveur d'informations de service au sein duquel les informations de service sont destinées à être mémorisées et apte à communiquer *via* un réseau de communication spécifique avec les différents moyens de communication destinés à être activés en cours de session, ledit serveur d'informations de service incluant les moyens de génération de l'identifiant d'appel, lesquels sont destinés à être activés sur requête de l'un desdits moyens de communication.

Selon encore un autre de ses aspects matériels, l'invention concerne en outre, en tant que moyen utile à sa mise en oeuvre, un serveur de données destiné à être inclus dans un système de télécommunication apte à assurer une transmission de données et d'informations de service formées par des informations de contexte ou de profil, qui sont associées auxdites données, lequel serveur de données étant caractérisé en ce qu'il est destiné à exécuter une mémorisation d'informations de service référencées au moyen d'une adresse représentative d'un identifiant d'une session, définie comme une chaîne d'activations successives de différents moyens de communication entre lesquels des données et des informations de service sont destinés à être transmises, ladite adresse assurant un accès par au moins un desdits moyens de communication auxdites informations de service, lesdites informations de service ayant été mémorisées par un autre desdits moyens de communication au cours de ladite session, et la mémorisation desdites informations de service étant assurée jusqu'au terme de ladite session.

Selon encore un autre de ses aspects matériels, l'invention concerne enfin, en tant qu'autre moyen utile à sa mise en oeuvre, un support de données destiné à être inclus dans un système de télécommunication apte à assurer une transmission de données et d'informations de service formées par des informations de contexte ou de profil, qui sont associées auxdites données, selon un procédé de transmission de données conforme à l'invention, lequel support de données étant caractérisé en ce qu'il est destiné à contenir au moins un ensemble d'informations de service et est muni de moyens pour référencer ledit ensemble au moyen d'une adresse représentative d'un identifiant d'une session, définie comme une chaîne d'activations successives de différents moyens de communication entre lesquels des données et des informations de service sont destinés à être transmises, ladite adresse assurant un accès par au moins un desdits moyens de communication audit ensemble d'informations de service, ledit ensemble ayant été mémorisé par un autre desdits moyens de communication au cours de ladite session, et la mémorisation dudit ensemble étant assurée jusqu'au terme de ladite session.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un schéma fonctionnel qui représente mode de fonctionnement possible d'un système de télécommunication dans lequel un procédé selon l'invention est mis en oeuvre,
La Fig.2 est un schéma fonctionnel qui représente un tel système de télécommunication dans un autre mode de fonctionnement possible,
La Fig.3 est un chronogramme qui illustre un mode d'adressage conforme à l'invention,
La Fig.4 est un chronogramme qui illustre un mode d'adressage conforme à une variante de l'invention,
La Fig.5 est un chronogramme qui illustre un mode d'adressage conforme à un mode de mise en oeuvre particulièrement avantageux de cette variante de l'invention, et
La Fig.6 est un schéma fonctionnel qui représente un système de télécommunication dans lequel un procédé un mode de mise en oeuvre particulièrement avantageux de cette variante est mis en oeuvre.

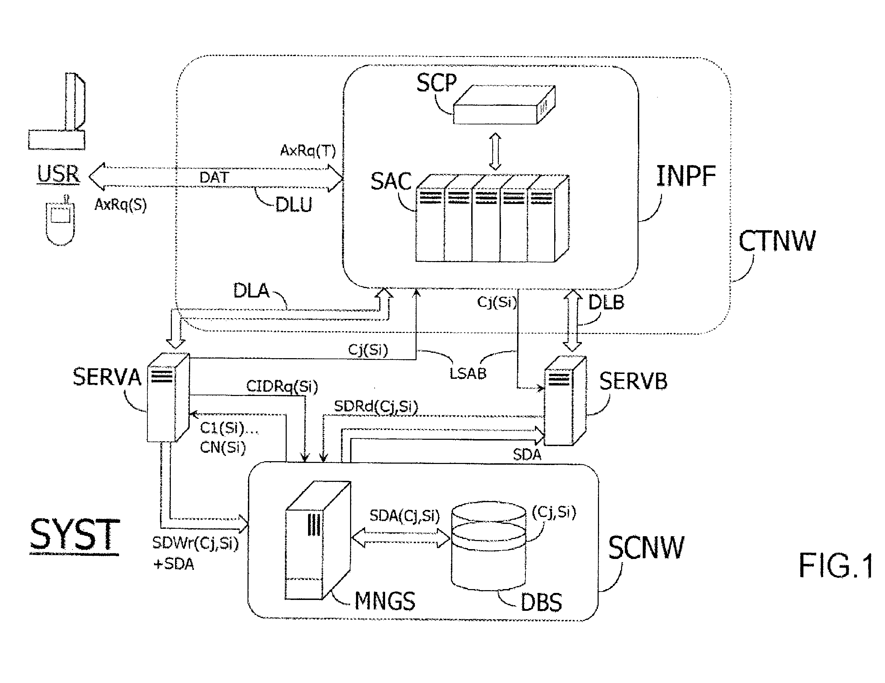

La Fig.1 représente schématiquement un système de télécommunication SYST muni de moyens pour mettre en oeuvre un procédé de transmission conforme à l'invention. Ce système SYST est voué à assurer une transmission de données DAT entre un terminal, par exemple un radiotéléphone, un agenda personnel muni de fonctionnalités d'émission/réception, ou encore un micro-ordinateur ou une console multimédia, mis à disposition d'un utilisateur USR du système SYST, et une multiplicité de moyens de communication, dans l'exemple décrit ici des serveurs de données amont et aval SERVA et SERVB, tous ces moyens de communication étant aptes à communiquer les uns avec les autres *via* des liaisons de données DLU, DLA et DLB établies au sein d'un réseau de communication principal formé par un réseau de téléphonie commuté CTNW de type RTC. Dans le mode de mise en oeuvre de l'invention représenté ici, le terminal est apte à émettre une requête d'accès AxRq(T) contenant des instructions identifiant un service défini par l'utilisateur USR au moyen par exemple d'un clavier alphanumérique, d'une interface graphique ou d'un outil de commande vocale. Après avoir étudié les instructions contenues dans la requête d'accès AxRq(T), une plate-forme de réseau intelligent INPF aiguillera les données DAT émises par le terminal de l'utilisateur USR vers le serveur de données amont SERVA qui aura été identifié par la plate-forme INPF comme mieux à même de répondre à la requête émise par l'utilisateur USR, et donc comme premier destinataire de la communication qu'aura initiée l'utilisateur USR. La plate-forme de réseau intelligent INPF inclut usuellement un commutateur d'accès SAC piloté par un point de commande de services SCP et est en elle-même bien connue de l'homme du métier, de sorte qu'elle ne sera pas davantage décrite ici.

Lorsque le serveur amont SERVA recevra de la part du terminal de l'utilisateur les données DAT, il recevra simultanément des informations de service relatives auxdites données DAT, et devra veiller à leur intégrité, ainsi qu'à leur mémorisation le cas échéant. En effet, il adviendra souvent que le serveur amont SERVA ne soit pas capable, à lui seul, de procéder à un traitement exhaustif de la requête AxRq(T) émise par l'utilisateur USR, auquel cas ledit serveur amont SERVA devra faire appel à un autre serveur SERVB, dit serveur aval, pour traiter certains aspects de cette requête. Dans une telle hypothèse, le serveur amont SERVA avertira la plate-forme INPF de la nécessité de l'intervention du serveur aval SERVB, lequel sera alors sollicité par ladite plate-forme INPF et se verra communiquer par le serveur amont SERVA les données qu'il est destiné à traiter. Par exemple, le serveur amont SERVA pourra supporter un service de fourniture de renseignements d'ordre général et recevoir de la part de l'utilisateur USR une requête aux fins de se voir connecter à un club de philatélie proche de sa localisation géographique, qui est incluse dans les informations de service. Le serveur aval SERBA correspondant au club de philatélie ciblé sera alors attrait dans la session de communication en cours en vue de satisfaire la requête de l'utilisateur USR. Les mises en relation successives du terminal de l'utilisateur USR avec le serveur amont SERVA, puis du serveur amont SERVA avec le serveur aval SERVB s'inscrivent dans une même chaîne d'activations successives de moyens de communication et sont donc incluses dans une même session de communication. Il est d'ailleurs tout à fait réaliste d'envisager que l'utilisateur USR ait entre-temps mis fin à sa connexion avec le réseau de communication principal CTNW, et que les serveurs amont et aval SERVA et SERVB continuent pour autant à traiter la requête AxRq(T) initialement émise par cet utilisateur USR. A l'issue du processus de traitement, le serveur aval SERVB ou le serveur amont SERVA pourront à leur tour solliciter une connexion au terminal dudit utilisateur USR au moyen d'une requête d'accès AxRq(S) émise via le réseau de communication principal CTNW, afin de restituer à cet utilisateur USR le résultat du traitement de sa requête initiale AxRq(T), toutes les communications sus-décrites s'inscrivant toujours dans le cadre de la même session de communication bien que l'utilisateur USR en ait été temporairement absent. Dans d'autres modes de mise en oeuvre de l'invention, le serveur amont SERVA pourra en outre être amené à attraire dans la session de communication en cours un terminal en lieu et place du serveur aval SERVB, particulièrement un terminal autre que celui mis à disposition de l'utilisateur USR.

Dans le mode de mise en oeuvre de l'invention représenté ici, lorsque le serveur amont SERVA aura reçu la requête initiale AxRq(T) et en aura déduit que l'intervention d'un serveur aval est au moins partiellement nécessaire au traitement de ladite requête, ce serveur amont SERVA établira une communication avec un serveur d'informations de service MNGS, afin d'organiser un adressage spécifique des informations de service reçues en parallèle avec cette requête initiale AxRq(T). Cette communication prendra la forme d'une requête CIDRq(Si) d'au moins un identifiant d'appel lié à la session en cours, qui aura été préalablement été repérée au moyen d'un identifiant de session Si défini soit par la plate-forme de réseau intelligent INPF, soit par le serveur amont SERVA. Dans d'autres modes de mise en oeuvre de l'invention, le serveur amont SERVA pourra également requérir du serveur d'informations de service MNGS qu'il définisse l'identifiant de session Si. Le serveur d'informations de service MNGS est ici apte à communiquer *via* un réseau de communication spécifique SCNW, par exemple un réseau de type Intranet dédié, avec les différents moyens de communication destinés à être activés en cours de session. En réponse à la requête d'identifiant d'appel CIDRq(Si), le serveur d'informations de service MNGS fournit dans cet exemple au serveur amont SERVA une pluralité d'identifiants d'appels C1(Si)...CN(Si) qui sont tous liés au même identifiant de session Si. Dans d'autres modes de mise en oeuvre de l'invention, les identifiants d'appel C1...CN pourront être générés en groupe sans pour autant être liés à l'avance à une session particulière. Le serveur amont SERVA peut alors émettre vers le serveur d'informations de service MNGS une requête en écriture SDWr(Cj,Si), aux fins de faire réaliser une mémorisation, à une adresse définie par une conjonction de l'identifiant d'appel Cj avec l'identifiant de session Si, d'un ensemble SDA d'informations de service qui est destiné au serveur aval SERVB. Le serveur d'informations de service MNGS opère alors cette mémorisation dans un support de données, ici une base de données DBS incluant par exemple un disque dur ou un disque optique, à une adresse incluant simultanément l'identifiant d'appel Cj et l'identifiant de session Si. Le serveur amont SERVA peut alors transmettre au serveur aval SERVB l'identifiant d'appel Cj(Si), *via* une liaison de signalisation LSAB établie au moyen du réseau de communication principal CTNW. De la sorte, lorsque le serveur aval SERVB recevra depuis la plate-forme INPF une requête d'intervention dans la session en cours, ledit serveur aval SERVB recevra simultanément *via* la liaison de signalisation LSAB une adresse à laquelle il pourra récupérer les informations de service mémorisées à l'instigation du serveur amont SERVA. Le serveur aval SERVB émettra alors une requête en lecture SDRd(Cj,Si) à destination du serveur d'informations de service MNGS, et obtiendra en retour une communication de l'ensemble SDA d'informations de service initialement mémorisé sur ordre du serveur amont SERVA à l'adresse définie par l'identifiant d'appel en liaison avec l'identifiant de session (Cj,Si).

Dans l'exemple qui précède, un seul identifiant d'appel Cj(Si) aura été utilisé, mais il doit être bien compris que le serveur amont SERVA a, dans ce mode particulier de mise en oeuvre de l'invention, la possibilité de mémoriser un nombre N d'ensembles SDj (pour j=1 à N) d'informations de service, chacun étant destiné à être repéré au moyen d'un identifiant d'appel Cj (pour j=1 à N), ce qui confère au système SYST une très grande souplesse d'utilisation, puisque les mémorisations peuvent être effectuées de manière dynamique, et donc à tout moment, même après que l'utilisateur USR se soit déconnecté du réseau de communication principal CTNW. De même, le serveur aval SERVB pourra lui aussi se voir attribuer des identifiants d'appels liées à l'identifiant Si de la session en cours, afin de commander à son tour une mémorisation d'informations de service identiques ou différentes de l'ensemble SDA qu'il a reçu du serveur amont SERVA, lesquelles informations pourront être destinées à d'autres serveurs disposés en aval du serveur aval SERVB mais pourront aussi être destinées aux moyens de communication situés en amont tels le serveur amont SERVA ou le terminal de l'utilisateur USR.

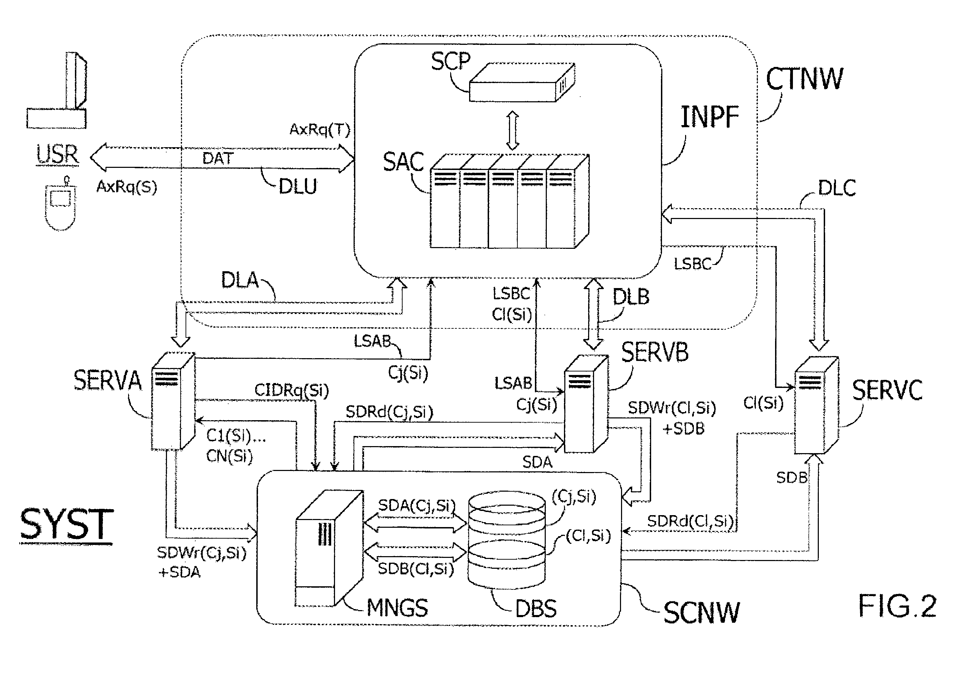

La Fig.2 illustre une situation dans laquelle le serveur aval SERVB aura sollicité une mémorisation d'un nouvel ensemble SDB d'informations de service auprès du serveur d'informations de service MNGS, au moyen d'une requête en écriture SDWr(Cl,Si) spécifiant une adresse définie par une conjonction d'un identifiant d'appel Cl préalablement réservé pour ledit serveur aval SERVB, d'une part, avec l'identifiant de session Si, d'autre part. Dans la mesure du possible, les éléments communs avec la Figure précédente ont été munis des mêmes signes de référence afin de faciliter la compréhension de l'exposé. Le serveur aval SERVB est ici apte à attraire dans la session un autre serveur aval SERVC au moyen d'une liaison de signalisation LSBC, par le truchement de laquelle il pourra également communiquer audit autre serveur aval SERVC l'identifiant d'appel Cl(Si) qui permettra à cet autre serveur aval SERVC de récupérer, au moyen d'une requête en lecture SDRd(Cl,Si), l'ensemble d'informations SDB qui a été mémorisé à son intention sur ordre du serveur SERVB.

Si, dans les exemples décrits ci-dessus, les informations de service SDA, SDB ont vocation à être simplement tenues à disposition des différents moyens de communication et à être ainsi uniquement communiquées lorsqu'une requête à cet effet est reçue par le serveur d'informations de service MNGS, il sera possible, dans d'autres modes de mise en oeuvre de l'invention, de munir ledit serveur d'informations de service MNGS de fonctionnalités d'émission spontanée d'ensembles d'informations de service à destination de moyens de communication préalablement identifiés par le serveur qui aura procédé à la mémorisation desdits ensembles. Dans une telle application, l'émission par le serveur amont SERVA de l'identifiant d'appel Cj(Si) ne serait plus nécessaire, de même que la requête en lecture SDRd(Cj,Si) émise par le serveur aval SERVB deviendrait superflue, puisque le serveur d'informations de service MNGS enverrait directement l'ensemble SDA au serveur SERVB dans une telle hypothèse.

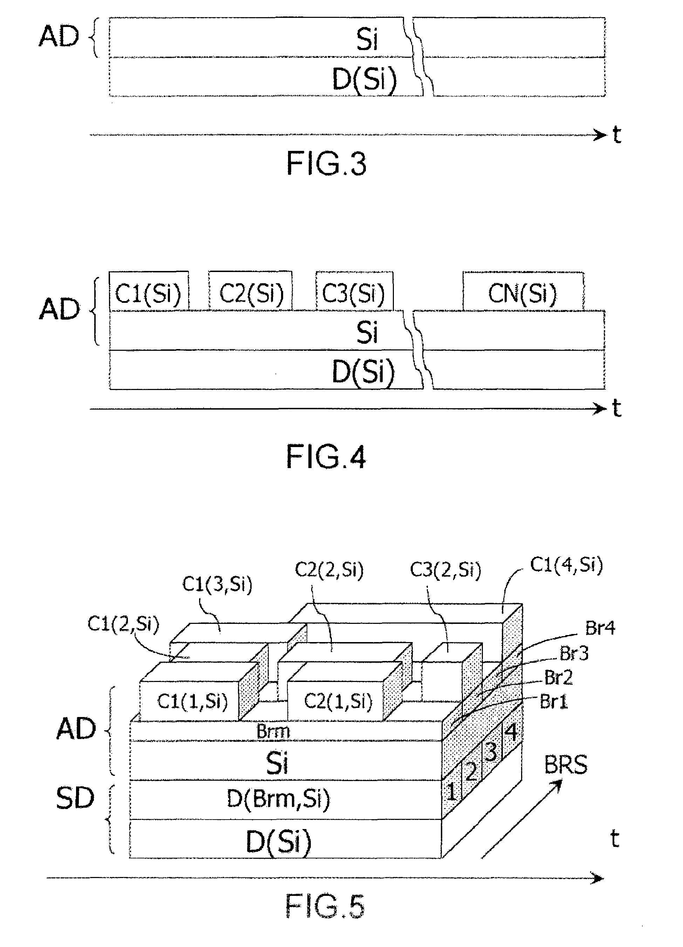

La Fig.3 illustre sous une forme très schématique le système d'adressage conforme à la présente invention, dans sa forme la plus élémentaire où un ensemble d'informations de service D(Si) est référencé au moyen d'une adresse AD qui est ici exclusivement constituée par l'identifiant de session Si. Ainsi qu'exposé plus haut, cette forme élémentaire de l'invention permet d'assurer tout au long de la session considérée une pérennité des informations de service D(Si), et apporte donc un avantage considérable par rapport à l'état actuel de la technique.

Au sens du présent exposé, un ensemble d'informations de service doit s'entendre comme un groupe d'informations qui sont relatives à un certain type de renseignement, comme par exemple trois coordonnées selon des directions distinctes forment un ensemble d'informations permettant de renseigner avec précision le destinataire de cet ensemble sur une position spatiale d'un objet ou d'un utilisateur.

La Fig.4 présente une variante de l'invention qui permet d'obtenir des avantages supplémentaires en termes de flexibilité puisque, conformément à l'exposé qui précède, cette variante permet, par l'utilisation de multiples identifiants d'appel Cj(Si) (pour j=1 à N) tous liés à l'unique identifiant de session Si décrit plus haut, de référencer de multiples ensembles d'informations de service D(Si) différents, et éventuellement mémorisés de façon dynamique dans le temps, chaque adresse AD de l'un de ces ensembles étant alors construite comme une conjonction de l'identifiant de session Si commun à tous les ensembles, d'une part, et d'un identifiant d'appel Cj(Si) spécifique à chaque ensemble, d'autre part.

La Fig.5 présente un mode de mise en oeuvre préféré de cette variante de l'invention qui permet d'obtenir encore d'autres avantages en termes de flexibilité. Dans l'exemple décrit ici, la session définie par l'identifiant Si ne se déroule pas de manière linéaire, un moyen de communication d'origine ayant par hypothèse attrait dans la session en cours non pas un seul, mais simultanément quatre moyens de communication différents destinés chacun à produire une contribution spécifique au traitement des données devant être accompli au cours de la session Si.

Les informations de service SD mémorisées dans le serveur prévu à cet effet incluent ainsi dans cet exemple non seulement des informations D(Si) accessibles à tous les intervenants dans la session Si, mais aussi des informations D(Brm,Si) (pour m=1 à 4) spécifiquement destinés à des premier, deuxième, troisième et quatrième moyens de communication respectivement reliés au moyen de communication d'origine par des première, deuxième, troisième et quatrième liaisons de signalisation. Le moyen de communication d'origine aura alors émis à destination de chacun de ces premier, deuxième, troisième et quatrième moyens de communication des identifiants d'appel Cj(m,Si) permettant à leurs destinataires de consulter des ensembles d'informations de service (Brm,Si) (pour m=1 à 4) qui leur sont réservés. Chaque adresse AD de l'un de ces ensembles (Brm,Si) sera ainsi construite comme une conjonction de l'identifiant de session Si commun à tous les ensembles, d'une part, et d'un identifiant d'appel Cj(m,Si) spécifique au destinataire considéré, d'autre part.

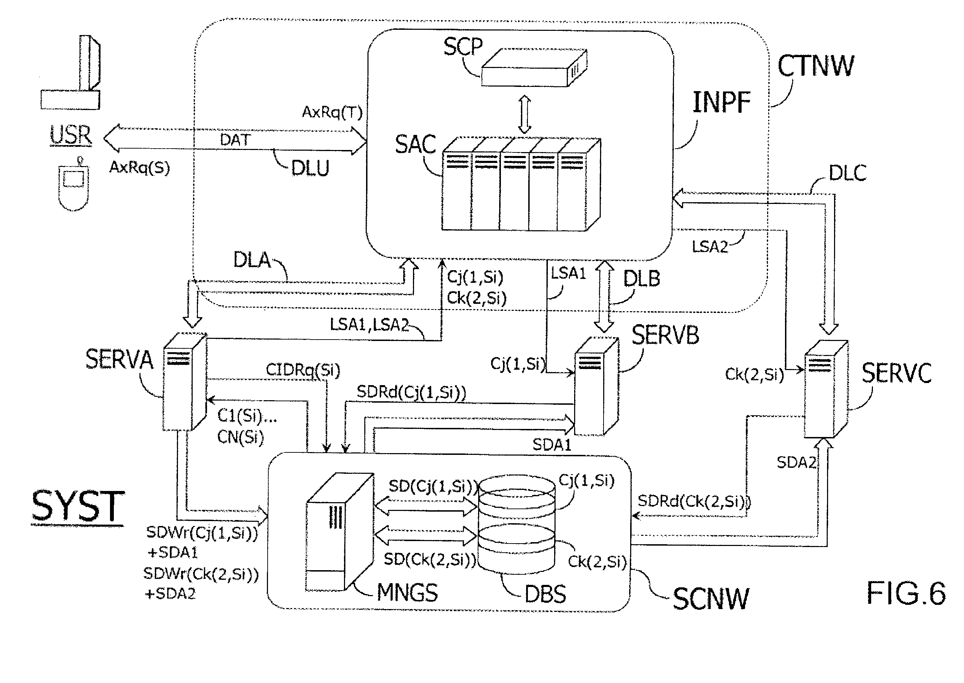

La Fig.6 représente un système de télécommunication SYST dans lequel cette variante préférée de l'invention est mise en oeuvre. Dans la mesure du possible, les éléments communs avec les Figures précédentes ont été munis des mêmes signes de référence afin de faciliter la compréhension de l'exposé. Dans ce mode de mise en oeuvre particulièrement avantageux de l'invention, un terminal mis à disposition d'un utilisateur USR ainsi que trois serveurs SERVA, SERVB et SERVC sont aptes à se communiquer des données les uns aux autres au moyen de liaisons de données DLU, DLA, DLB et DLC et d'une plate-forme de réseau intelligent INPF. Les serveurs SERVA, SERVB et SERVC sont en outre aptes à communiquer avec un serveur d'informations de service MNGS *via* un réseau de communication spécifique SCNW, par exemple du type Intranet dédié. Dans l'hypothèse illustrée par la présente Figure, le serveur amont SERVA, après avoir reçu des données et des informations de service associées en provenance du terminal mis à disposition de l'utilisateur USR, constate qu'il doit attraire dans la session non pas un, mais simultanément un premier et un deuxième serveur aval SERVB et SERVC, afin de satisfaire les termes de la requête AxRq(T) émise par l'utilisateur USR. Le serveur amont SERVA émet donc simultanément une première et une deuxième requête en écriture SDWr(Cj(1,Si)) et SDWr(Ck(2,Si)), accompagnées d'un premier et d'un deuxième ensemble d'informations de service SDA1 et SDA2 respectivement destinés aux premier et deuxième serveur aval SERVB et SERVC, lesdits premier et deuxième ensembles d'informations de service SD1 et SD2 étant référencés au moyen d'adresses Cj(1,Si) et Ck(2,Si) constituées chacune d'un identifiant d'appel Cj ou Ck qui est lié simultanément à l'identifiant de session Si et à un identifiant de liaison 1 ou 2. Les identifiants d'appels Cj(1,Si) et Ck(2,Si) sont ensuite simultanément transmis par le serveur amont SERVA vers les premier et deuxième serveurs avals SERVB et SERVC *via* des première et deuxième liaisons, qui sont ici des liaisons de signalisation LSA1 et LSA2 distinctes des liaisons de données DLB et DMC, de sorte que chacun de ces premier et deuxième serveurs avals SERVB et SERVC pourra récupérer l'ensemble d'informations de service SDA1 ou SDA2 qui lui est destiné en formulant, auprès du serveur d'informations de service MNGS une requête en lecture SDRd(Cj(1,Si)) ou SDRd(Ck(2,Si)) mentionnant l'identifiant d'appel Cj(1,Si) ou Ck(2,Si) qui lui aura été attribué par le serveur amont SERVA.

La description qui précède illustre non seulement le fait que l'invention permet d'assurer une pérennité des informations de service relatives à une session de communication tout au long du déroulement de ladite session, mais aussi le fait que diverses variantes de cette invention permettent en outre un enrichissement dynamique de ces informations de service, ainsi qu'une sécurisation de ces informations de service par un adressage mettant en oeuvre des identifiants d'appels multiples mais spécifiques aux informations considérées et/ou à leurs destinataires.

## Revendications

1. Procédé de transmission de données (DAT) et d'informations de service qui sont associées auxdites données (DAT), entre au moins deux moyens de communication distincts (SERVA, SERVB) sur un réseau de communication, ledit procédé incluant une étape d'adressage au cours de laquelle un ensemble D(Si) d'informations de service formées par des informations de contexte ou de profil, qui est destiné à être mémorisé, est référencé au moyen d'une adresse (AD), procédé **caractérisé en ce qu'**il comprend des étapes de :
- réception par un premier moyen de communication (SERVA) desdites données (DAT) et détermination qu'au moins un second moyen de communication (SERVB) est nécessaire au traitement desdites données ;
- sur requête du premier moyen de communication (SERVA), mémorisation dudit ensemble D(Si) d'informations de service à une adresse (AD), ladite adresse (AD) incluant un identifiant de session (Si), une session étant définie comme une chaîne d'activations successives de différents moyens de communication (SERVA, SERVB) nécessaires au traitement desdites données (DAT) ;
- sur requête du second moyen de communication (SERVB) récupération, par ledit second moyen de communication, dudit ensemble D(Si) d'informations de service mémorisé à ladite adresse (AD).

2. Procédé selon la revendication 1, **caractérisé en ce qu'**il inclut en outre au moins :
. une étape de génération d'un identifiant d'appel (Cj(Si)) destiné à former partie de l'adresse (AD) attribuée à un ensemble D(Si) donné d'informations de service et à être temporairement lié à un identifiant de session (Si) propre à la session considérée, et
. une étape de transmission dudit identifiant d'appel (Cj(Si)) *via* une liaison de signalisation (LSAB) établie entre deux moyens de communication (SERVA, SERVB).

3. Procédé selon la revendication 2, **caractérisé en ce qu'**il inclut en outre une étape de génération d'au moins un premier et un deuxième identifiant de branche, liés chacun à un même identifiant de session (Si), laquelle étape étant destinée à être exécutée lors d'un établissement simultané d'une première et d'une deuxième liaison impliquant toutes deux un même moyen de communication d'origine, tout identifiant d'appel (Cj(Si)) destiné à être transmis par ce moyen de communication d'origine *via* l'une des première et deuxième liaisons étant alors lié simultanément à l'identifiant de session (Si) et à l'un des premier et deuxième identifiants de branche, respectivement.

4. Procédé selon l'une des revendications 2 ou 3, **caractérisé en ce que**, les informations de service étant destinées à être mémorisées au sein d'un serveur (MNGS) apte à communiquer *via* un réseau de communication spécifique avec les différents moyens de communication (SERVA, SERVB) destinés à être activés en cours de session, l'étape de génération de l'identifiant d'appel (Cj(Si)) est exécutée par ledit serveur (MNGS) sur requête de l'un desdits moyens de communication (SERVA).

5. Système (SYST) de télécommunication apte à assurer une transmission de données (DAT) et d'informations de service formées par des informations de contexte ou de profil qui sont associées auxdites données (DAT), selon un procédé de transmission de données conforme à l'une quelconque des revendications 1 à 4, ledit système incluant des moyens d'adressage aptes à référencer lesdites informations de service au moyen d'une adresse (AD), système (SYST) **caractérisé en ce que** lesdits moyens d'adressage dudit système incluant dans ladite adresse (AD) un identifiant de session (Si), une session étant définie comme une chaîne d'activations successives de différents moyens de communication (SERVA, SERVB) entre lesquels des données (DAT) et des informations de service sont destinées à être transmises, et **en ce que** ladite adresse (AD) assure un accès par au moins un desdits moyens de communication (SERVB) auxdites informations de service, lesdites informations de service ayant été mémorisées par un autre desdits moyens de communication (SERVA) au cours de ladite session, et la mémorisation desdites informations de service étant assurée jusqu'au terme de ladite session.

6. Système (SYST) de télécommunication selon la revendication 5, **caractérisé en ce qu'**il inclut en outre :
. des moyens de génération d'un identifiant d'appel (Cj(Si)) destiné à former partie de l'adresse (AD) attribuée à un ensemble D(Si) donné d'informations de service et à être temporairement lié à un identifiant de session (Si) propre à la session considérée, et
. des moyens de transmission dudit identifiant d'appel (Cj(Si)) *via* une liaison de signalisation (LSAB) établie entre deux moyens de communication (SERVA, SERVB).

7. Système (SYST) de télécommunication selon la revendication 6, **caractérisé en ce qu'**il inclut en outre des moyens de génération d'au moins un premier et un deuxième identifiant de branche, liés chacun à un même identifiant de session (Si), lesquels moyens de génération étant destinés à être activés lors d'un établissement simultané d'une première et d'une deuxième liaison impliquant toutes deux un même moyen de communication d'origine, tout identifiant d'appel (Cj(Si)) destiné à être transmis par ce moyen de communication d'origine *via* l'une des première et deuxième liaisons étant alors lié simultanément à l'identifiant de session (Si) et à l'un des premier et deuxième identifiants de branche, respectivement.

8. Système (SYST) de télécommunication selon l'une des revendications 6 ou 7, **caractérisé en ce qu'**il inclut un serveur (MNGS) d'informations de service au sein duquel les informations de service sont destinées à être mémorisées et apte à communiquer *via* un réseau de communication spécifique avec les différents moyens de communication (SERVA, SERVB) destinés à être activés en cours de session, ledit serveur (MNGS) d'informations de service incluant les moyens de génération de l'identifiant d'appel (Cj(Si)), lesquels sont destinés à être activés sur requête de l'un desdits moyens de communication (SERVA).

9. **Serveur de données** (MNGS) destiné à être inclus dans un système (SYST) de télécommunication apte à assurer une transmission de données (DAT) et d'informations de service formées par des informations de contexte ou de profil, qui sont associées auxdites données (DAT), selon un procédé de transmission de données conforme à l'une quelconque des revendications 1 à 4, lequel serveur de données (MNGS) étant **caractérisé en ce qu'**il est destiné à exécuter une mémorisation d'informations de service référencées au moyen d'une adresse (AD) représentative d'un identifiant (Si) d'une session, définie comme une chaîne d'activations successives de différents moyens de communication (SERVA, SERVB) entre lesquels des données (DAT) et des informations de service sont destinés à être transmises, ladite adresse (AD) assurant un accès par au moins un desdits moyens de communication (SERVB) auxdites informations de service, lesdites informations de service ayant été mémorisées par un autre desdits moyens de communication (SERVA) au cours de ladite session, et la mémorisation desdites informations de service étant assurée jusqu'au terme de ladite session.

10. **Support de données** destiné à être inclus dans un système (SYST) de télécommunication apte à assurer une transmission de données (DAT) et d'informations de service formées par des informations de contexte ou de profil, qui sont associées auxdites données (DAT), selon un procédé de transmission de données conforme à l'une quelconque des revendications 1 à 4, lequel support de données étant **caractérisé en ce qu'**il est destiné à contenir au moins un ensemble D(Si) d'informations de service et est muni de moyens pour référencer ledit ensemble D(Si) au moyen d'une adresse (AD) représentative d'un identifiant (Si) d'une session, définie comme une chaîne d'activations successives de différents moyens de communication (SERVA, SERVB) entre lesquels des données (DAT) et des informations de service sont destinés à être transmises, ladite adresse (AD) assurant un accès par au moins un desdits moyens de communication (SERVB) audit ensemble D(Si) d'informations de service, ledit ensemble D(Si) ayant été mémorisé par un autre desdits moyens de communication (SERVA) au cours de ladite session, et la mémorisation dudit ensemble D(Si) étant assurée jusqu'au terme de ladite session.

## Patentansprüche

1. Verfahren zur Übertragung von Daten (DAT) und Dienstinformationen, die den Daten (DAT) zugeordnet sind, zwischen mindestens zwei getrennten Kommunikationsmitteln (SERVA, SERVB) auf einem Kommunikationsnetzwerk, wobei das Verfahren einen Schritt der Adressierung umfasst, während dessen eine Gesamtheit D(Si) von Dienstinformationen, die von Kontext- oder Profilinformationen gebildet sind, welche dazu bestimmt ist, gespeichert zu werden, mittels einer Adresse (AD) eine Referenz erhält, wobei das Verfahren **dadurch gekennzeichnet ist, dass** es die folgenden Schritte umfasst:
- Empfang der Daten (DAT) durch ein erstes Kommunikationsmittel (SERVA) und Bestimmung, dass mindestens ein zweites Kommunikationsmittel (SERVB) für die Verarbeitung der Daten notwendig ist;
- auf Anfrage des ersten Kommunikationsmittels (SERVA) Speicherung der Gesamtheit D(Si) von Dienstinformationen an einer Adresse (AD), wobei die Adresse (AD) einen Identifikator einer Sitzung (Si) einschließt, wobei eine Sitzung als eine Kette von aufeinanderfolgenden Aktivierungen verschiedener Kommunikationsmittel (SERVA, SERVB), die für die Verarbeitung der Daten (DAT) notwendig sind, definiert ist;
- auf Anfrage des zweiten Kommunikationsmittels (SERVB) Wiedergewinnung der Gesamtheit D(Si) von an der Adresse (AD) gespeicherten Dienstinformationen durch das zweite Kommunikationsmittel.

2. Verfahren nach Anspruch 1, **dadurch gekennzeichnet, dass** es ferner mindestens umfasst:
- einen Schritt der Erzeugung eines Rufidentifikators (Cj(Si)), der dazu bestimmt ist, Teil der Adresse (AD) zu sein, die einer gegebenen Gesamtheit D(Si) von Dienstinformationen zugeordnet ist, und vorübergehend mit einem Sitzungsidentifikator (Si), der der betreffenden Sitzung eigen ist, verbunden zu sein, und
- einen Schritt der Übertragung des Rufidentifikators (Cj(Si)) über eine Anzeigeverbindung (LSAB), die zwischen zwei Kommunikationsmitteln (SERVA, SERVB) hergestellt ist.

3. Verfahren nach Anspruch 2, **dadurch gekennzeichnet, dass** es ferner einen Schritt der Erzeugung mindestens eines ersten und eines zweiten Leitungsidentifikators, die jeweils mit einem selben Sitzungsidentifikator (Si) verbunden sind, wobei der Schritt dazu bestimmt ist, bei einer gleichzeitigen Herstellung einer ersten und einer zweiten Verbindung, die beide ein selbes ursprüngliches Kommunikationsmittel erfordern, ausgeführt zu werden, wobei jeder Rufidentifikator (Cj(Si)), der dazu bestimmt ist, durch dieses ursprüngliche Kommunikationsmittel über eine der ersten und zweiten Verbindungen übertragen zu werden, nun gleichzeitig mit dem Sitzungsidentifikator (Si) und einem der ersten bzw. zweiten Leitungsidentifikatoren verbunden ist.

4. Verfahren nach einem der Ansprüche 2 oder 3, **dadurch gekennzeichnet, dass**, da die Dienstinformationen dazu bestimmt sind, in einem Server (MNGS) gespeichert zu werden, der geeignet ist, über ein spezifisches Kommunikationsnetzwerk mit den verschiedenen Kommunikationsmitteln (SERVA, SERVB), die dazu bestimmt sind, während der Sitzung aktiviert zu werden, zu kommunizieren, der Schritt der Erzeugung des Rufidentifikators (Cj(Si)) durch den Server (MNGS) auf Anfrage eines der Kommunikationsmittel (SERVA) ausgeführt wird.

5. Telekommunikationssystem (SYST), das geeignet ist, eine Übertragung von Daten (DAT) und Dienstinformationen, die von Kontext- oder Profilinformationen gebildet sind, die mit den Daten (DAT) verbunden sind, nach einem Datenübertragungsverfahren nach einem beliebigen der Ansprüche 1 bis 4 zu gewährleisten, wobei das System Adressiermittel einschließt, die geeignet sind, die Dienstinformationen mittels einer Adresse (AD) mit einer Referenz zu belegen, wobei das System (SYST) **dadurch gekennzeichnet ist, dass** die Adressiermittel des Systems in der Adresse (AD) einen Sitzungsidentifikator (Si) einschließen, wobei eine Sitzung als eine Kette von aufeinanderfolgenden Aktivierungen verschiedener Kommunikationsmittel (SERVA, SERVB), zwischen denen Daten (DAT) und Dienstinformationen übertragen werden sollen, definiert ist, und dass die Adresse (AD) einen Zugang durch mindestens eines der Kommunikationsmittel (SERVB) zu den Dienstinformationen gewährleistet, wobei die Dienstinformationen durch ein weiteres der Kommunikationsmittel (SERVA) während der Sitzung gespeichert wurden, und die Speicherung der Dienstinformationen bis zum Ende der Sitzung gewährleistet ist.

6. Telekommunikationssystem (SYST) nach Anspruch 5, **dadurch gekennzeichnet, dass** es ferner einschließt:
- Mittel zur Erzeugung eines Rufidentifikators (Cj(Si)), der dazu bestimmt ist, Teil der Adresse (AD) zu sein, die einer gegebenen Gesamtheit D(Si) von Dienstinformationen zugeordnet ist, und vorübergehend mit einem Sitzungsidentifikator (Si), der der betreffenden Sitzung eigen ist, verbunden zu sein, und
- Mittel zur Übertragung des Rufidentifikators (Cj(Si)) über eine Anzeigeverbindung (LSAB), die zwischen zwei Kommunikationsmitteln (SERVA, SERVB) hergestellt ist.

7. Telekommunikationssystem (SYST) nach Anspruch 6, **dadurch gekennzeichnet, dass** es ferner Mittel zur Erzeugung mindestens eines ersten und eines zweiten Leitungsidentifikators einschließt, die jeweils mit einem selben Sitzungsidentifikator (Si) verbunden sind, wobei die Erzeugungsmittel dazu bestimmt sind, bei einer gleichzeitigen Herstellung einer ersten und einer zweiten Verbindung, die beide ein selbes ursprüngliches Kommunikationsmittel erfordern, aktiviert zu werden, wobei jeder Rufidentifikator (Cj(Si)), der dazu bestimmt ist, durch dieses ursprüngliche Kommunikationsmittel über eine der ersten und zweiten Verbindungen übertragen zu werden, nun gleichzeitig mit dem Sitzungsidentifikator (Si) und einem der ersten bzw. zweiten Leitungsidentifikatoren verbunden ist.

8. Telekommunikationssystem (SYST) nach einem der Ansprüche 6 oder 7, **dadurch gekennzeichnet, dass** es einen Server (MNGS) von Dienstinformationen einschließt, in dem die Dienstinformationen dazu bestimmt sind, gespeichert zu werden, und der geeignet ist, über ein spezifisches Kommunikationsnetz mit den verschiedenen Kommunikationsmitteln (SERVA, SERVB), die dazu bestimmt sind, während der Sitzung aktiviert zu werden, zu kommunizieren, wobei der Server (MNGS) von Dienstinformationen die Mittel zur Erzeugung des Rufidentifikators (Cj(Si)) einschließt, die dazu bestimmt sind, auf Anfrage eines der Kommunikationsmittel (SERVA) aktiviert zu werden.

9. Datenserver (MNGS), der dazu bestimmt ist, in ein Telekommunikationsnetz (SYST) integriert zu werden, das geeignet ist, eine Übertragung von Daten (DAT) und Dienstinformationen, die von Kontext- oder Profilinformationen gebildet sind, die mit den Daten (DAT) verbunden sind, nach einem Datenübertragungsverfahren nach einem beliebigen der Ansprüche 1 bis 4 zu gewährleisten, wobei der Datenserver (MNGS) **dadurch gekennzeichnet ist, dass** er dazu bestimmt ist, eine Speicherung von mit einer für einen Identifikator (Si) einer Sitzung repräsentativen Adresse (AD) mit einer Referenz belegten Dienstinformationen auszuführen, wobei eine Sitzung als eine Kette von aufeinanderfolgenden Aktivierungen verschiedener Kommunikationsmittel (SERVA, SERVB), zwischen denen Daten (DAT) und Dienstinformationen übertragen werden sollen, definiert ist, wobei die Adresse (AD) einen Zugang durch mindestens eines der Kommunikationsmittel (SERVB) zu den Dienstinformationen gewährleistet, wobei die Dienstinformationen durch ein weiteres der Kommunikationsmittel (SERVA) während der Sitzung gespeichert wurden, und die Speicherung der Dienstinformationen bis zum Ende der Sitzung gewährleistet ist.

10. Datenträger, der dazu bestimmt ist, in ein Telekommunikationssystem (SYST) integriert zu werden, das geeignet ist, eine Übertragung von Daten (DAT) und Dienstinformationen, die von Kontext- oder Profilinformationen gebildet sind, die mit den Daten (DAT) verbunden sind, nach einem Datenübertragungsverfahren nach einem beliebigen der Ansprüche 1 bis 4 zu gewährleisten, wobei der Datenträger **dadurch gekennzeichnet ist, dass** er dazu bestimmt ist, mindestens eine Gesamtheit D(Si) von Dienstinformationen zu enthalten, und mit Mitteln versehen ist, um die Gesamtheit D(Si) mit einer für einen Identifikator (Si) einer Sitzung repräsentativen Adresse (AD) mit einer Referenz zu belegen, wobei eine Sitzung als eine Kette von aufeinanderfolgenden Aktivierungen verschiedener Kommunikationsmittel (SERVA, SERVB), zwischen denen Daten (DAT) und Dienstinformationen übertragen werden sollen, definiert ist, wobei die Adresse (AD) einen Zugang durch mindestens eines der Kommunikationsmittel (SERVB) zu der Gesamtheit D(Si) von Dienstinformationen gewährleistet, wobei die Gesamtheit (D(Si) durch ein weiteres der Kommunikationsmittel (SERVA) während der Sitzung gespeichert wurde, und die Speicherung der Gesamtheit D(Si) bis zum Ende der Sitzung gewährleistet ist.

## Claims

1. **Method** for transmitting data (DAT) and service information associated with said data (DAT), between at least two distinct communication means (SERVA, SERVB) over a communication network, said method including an addressing step during which a set D(Si) of service information formed by context or profile information, which is intended to be stored, is referenced by means of an address (AD), the method being **characterized in that** it comprises steps of:
- reception by a first communication means (SERVA) of said data (DAT) and determination that at least one second communication means (SERVB) is necessary to the processing of said data;
- upon request from the first communication means (SERVA), storage of said set D(Si) of service information at an address (AD), said address (AD) including a session identifier (Si), a session being defined as a string of successive activations of different communication means (SERVA, SERVB) necessary to the processing of said data (DAT);
- upon request from the second communication means (SERVB), recovery, by said second communication means, of said set D(Si) of service information stored at said address (AD).

2. Method according to Claim 1, **characterized in that** it also includes at least:
- a step of generation of call identifier (Cj(Si)) intended to form part of the address (AD) assigned to a given set D(Si) of service information and to be temporarily linked to a session identifier (Si) specific to the session concerned, and
- a step of transmission of said call identifier (Cj(Si)) *via* a signalling link (LSAB) set up between two communication means (SERVA, SERVB).

3. Method according to Claim 2, **characterized in that** it also includes a step of generation of at least one first and one second branch identifier, each linked to a same session identifier (Si), said step being intended to be executed upon a simultaneous setting up of a first and a second links both involving a same origin communication means, any call identifier (Cj(Si)) intended to be transmitted by this origin communication means *via* one of the first and second links then being linked simultaneously to the session identifier (Si) and to one of the first and second branch identifiers, respectively.

4. Method according to one of Claims 2 and 3, **characterized in that**, the service information being intended to be stored in a server (MNGS) capable of communication *via* a specific communication network with the different communication means (SERVA, SERVB) intended to be activated during a session, the step of generation of the call identifier (Cj(Si)) is executed by said server (MNGS) upon request from one of said communication means (SERVA).

5. **Telecommunication system** (SYST) capable of ensuring a transmission of data (DAT) and of service information formed by context or profile information associated with said data (DAT), according to a data transmission method conforming to any one of Claims 1 to 4, said system including addressing means capable of referencing said service information by means of an address (AD), the system (SYST) being **characterized in that** said addressing means of said system including in said address (AD) a session identifier (Si), a session being defined as a string of successive activations of different communication means (SERVA, SERVB) between which data (DAT) and service information are intended to be transmitted, and **in that** said address (AD) ensures access by at least one of said communication means (SERVB) to said service information, said service information having been stored by another of said communication means (SERVA) during said session, and the storage of said service information being ensured until the end of said session.

6. Telecommunication system (SYST) according to Claim 5, **characterized in that** it also includes:
- means for generating a call identifier (Cj(Si)) intended to form part of the address (AD) assigned to a given set D(Si) of service information and to be temporarily linked to a session identifier (Si) specific to the session concerned, and
- means for transmitting said call identifier (Cj(Si)) *via* a signalling link (LSAB) set up between two communication means (SERVA, SERVB).

7. Telecommunication system (SYST) according to Claim 6, **characterized in that** it also includes means for generating at least one first and one second branch identifier, each linked to a same session identifier (Si), said generation means being intended to be activated upon a simultaneous setting up of a first and a second link both involving a same origin communication means, any call identifier (Cj(Si)) intended to be transmitted by this origin communication means *via* one of the first and second links then being linked simultaneously to the session identifier (Si) and to one of the first and second branch identifiers, respectively.

8. Telecommunication system (SYST) according to one of Claims 6 and 7, **characterized in that** it includes a service information server (MNGS) in which the service information are intended to be stored and capable of communicating *via* a specific communication network with the different communication means (SERVA, SERVB) intended to be activated during a session, said service information server (MNGS) including means for generating the call identifier (Cj(Si)), which are intended to be activated upon request from one of said communication means (SERVA).

9. **Data server** (MNGS) intended to be included in a telecommunication system (SYST) capable of ensuring a transmission of data (DAT) and of service information formed by context or profile information associated with said data (DAT), according to a data transmission method conforming to any one of Claims 1 to 4, said data server (MNGS) being **characterized in that** it is intended to execute a storage of service information referenced by means of an address (AD) representative of an identifier (Si) of a session, defined as a string of successive activations of different communication means (SERVA, SERVB) between which data (DAT) and service information are intended to be transmitted, said address (AD) ensuring access by at least one of said communication means (SERVB) to said service information, said service information having been stored by another of said communication means (SERVA) during said session, and the storage of said service information being ensured until the end of said session.

10. **Data medium** intended to be included in a telecommunication system (SYST) capable of ensuring a transmission of data (DAT) and of service information formed by context or profile information associated with said data (DAT), according to a data transmission method conforming to any one of Claims 1 to 4, said data medium being **characterized in that** it is intended to contain at least one set D(Si) of service information and is provided with means for referencing said set D(Si) by means of an address (AD) representative of an identifier (Si) of a session, defined as a string of successive activations of different communication means (SERVA, SERVB) between which data (DAT) and service information are intended to be transmitted, said address (AD) ensuring access by at least one of said communication means (SERVB) to said set D(Si) of service information, said set D(Si) having been stored by another of said communication means (SERVA) during said session, and the storage of said set D(Si) being ensured until the end of said session.
